(19) Europäisches Patentamt

European Patent Office

Office européen des brevets

(11) **EP 4 335 183 B1**

(12) **EUROPEAN PATENT SPECIFICATION**

(45) Date of publication and mention
of the grant of the patent:
**08.07.2026 Bulletin 2026/28**

(21) Application number: **21941077.6**

(22) Date of filing: **08.05.2021**

(51) International Patent Classification (IPC):
***H04W 56/00*** (2009.01)   ***H04B 7/00*** (2006.01)

(52) Cooperative Patent Classification (CPC):
**H04W 56/0045; H04B 7/18513; H04L 67/52;
H04W 84/06;** H04L 67/62; H04W 4/026

(86) International application number:
**PCT/CN2021/092463**

(87) International publication number:
**WO 2022/236496 (17.11.2022 Gazette 2022/46)**

(54) **TRANSMISSION FOR TIME SYNCHRONIZATION**

ÜBERTRAGUNG ZUR ZEITSYNCHRONISATION

TRANSMISSION POUR SYNCHRONISATION TEMPORELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.03.2024 Bulletin 2024/11**

(73) Proprietor: **Nokia Technologies Oy
02610 Espoo (FI)**

(72) Inventors:
• **LEE, Gilsoo
Naperville, Illinois 60540 (US)**
• **HSIEH, Tzu-Chung
Hoffman Estates, Illinois 60192 (US)**
• **YUAN, Ping
Beijing 100011 (CN)**
• **LAURIDSEN, Mads
9260 Gistrup (DK)**

(74) Representative: **Nokia EPO representatives
Nokia Technologies Oy
Karakaari 7
02610 Espoo (FI)**

(56) References cited:
WO-A1-2005/062501    CN-A- 110 602 779
US-A1- 2006 234 624    US-A1- 2020 404 683

• **THALES ET AL: "On Doppler shift compensation
and Timing Advance in NTN", vol. RAN WG1, no.
Reno,USA; 20190513 - 20190517, 13 May 2019
(2019-05-13), XP051728828, Retrieved from the
Internet <URL:http://www.3gpp.org/ftp/Meetings
%5F3GPP%5FSYNC/RAN1/Docs/R1%
2D1907390%2Ezip> [retrieved on 20190513]**
• **FRAUNHOFER IIS, FRAUNHOFER HHI, THALES:
"Timing Advance Adjustments for Satellite
Communications (NTN)", 3GPP DRAFT;
R1-1904225-TA ADJUSTMENTS FOR NTN, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no.
Xi’an, China; 20190408 - 20190412, 7 April
2019 (2019-04-07), Mobile Competence Centre ;
650, route des Lucioles ; F-06921 Sophia-
Antipolis Cedex ; France
, XP051699552**

EP 4 335 183 B1

- NOKIA, NOKIA SHANGHAI BELL: "Discussion on 2-Step RACH adaptation in NTN", 3GPP DRAFT; R2-2009981, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20201102 - 20201113, 23 October 2020 (2020-10-23), Mobile Competence Centre ; 650, route des Lucioles ; F-06921 Sophia-Antipolis Cedex ; France , XP051942734
- THALES, FRAUNHOFER IIS: "On Doppler shift compensation and Timing Advance in NTN", 3GPP DRAFT; R1-1907390 - ON DOPPLER SHIFT COMPENSATION AND TIMING ADVANCE IN NTN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno,USA; 20190513 - 20190517, 13 May 2019 (2019-05-13), Mobile Competence Centre ; 650, route des Lucioles ; F-06921 Sophia-Antipolis Cedex ; France , XP051728828

## Description

### Field

The following exemplary embodiments relate to wireless communication and synchronization of timing regarding transmissions.

### Background

Wireless communication networks, such as cellular communication networks, allows devices to freely move from one area to another. Data transmitted using wireless communication network may follow transmission period configurations. Thus, the receiving party and the transmitting party are to be synchronized in terms of timing of the transmission periods. US2006/234624 A1 discloses a system and method of dynamic packet transmission for assisted global positioning system (AGPS). US 2020/404683 A1 discloses selective adjustment of packet durations. Thales et al: "On Doppler Shift Compensation and Timing Advance in NTN", 3GPP Drafts; R1-1907390 - On Doppler Shift Compensation and Timing Advance in NTN, 3rd Generation Partnership Project (3GPP), Mobile Competence Centre; 650, Route Des Lucioles; F-06920 Sophia-Antipol, vol. RAN WG1, Reno, USA,; 20190513 - 20190517, 13 May 2019, discloses a Doppler shift pre/post-compensation mechanism.

### Brief Description

The scope of protection sought for various embodiments of the disclosure is set out by the independent claims. The exemplary embodiments and features, if any, described in this specification that do not fall under the scope of the independent claims are to be interpreted as examples useful for understanding various embodiments of the disclosure.

According to a first aspect there is provided an apparatus according to claim 1 of the appended set of claims.

According to a second aspect there is provided an apparatus according to claim 10 of the appended set of claims.

### List of Drawings

In the following, the disclosure will be described in greater detail with reference to the embodiments and the accompanying drawings, in which

FIG. 1 illustrates an exemplary embodiment of a radio access network.

FIG. 2 illustrates an exemplary embodiment of transmission and synchronization periods.

FIG. 3A illustrates a diagram according to an exemplary embodiment regarding changes in timing advance values.

FIG. 3B illustrates a graph according to an exemplary embodiment of a Doppler shift during a transmission period.

FIG. 4 illustrates a flow chart according to an exemplary embodiment.

FIG. 5 illustrates exemplary embodiments of transmission periods.

FIG. 6A-6E illustrate timing advance changes for different transmission periods at different elevation angles.

FIG. 6F illustrates an exemplary embodiment of movement of a satellite and possible locations of a terminal device.

FIG. 6G illustrates an exemplary graph of an evaluation of the impact of using an azimuth angle.

FIG. 7A and 7B illustrate exemplary embodiments in which a terminal device performs timing advance adjustment.

FIG. 8 and FIG. 9 illustrate signalling flow charts.

FIG. 10 and FIG. 11 illustrate exemplary embodiments of an apparatus.

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments described herein may be implemented in a communication system, such as in at least one of the following: Global System for Mobile Communications (GSM) or any other second generation cellular communication system, Universal Mobile Telecommunication System (UMTS, 3G) based on basic wideband-code division multiple access (W-CDMA), high-speed packet access (HSPA), Long Term Evolution (LTE), LTE-Advanced, a system based on IEEE 802.11 specifications, a system based on IEEE 802.15 specifications, narrowband Internet of things (NB-IoT), LTE Machine type of communication (LTE-M) which includes enhanced Machine Type Communication (eMTC) and/or a fifth generation (5G) mobile or cellular communication system. The embodiments are not, however, restricted to the system given as an example but a person skilled in the art may apply the solution to other communication systems provided with necessary properties.

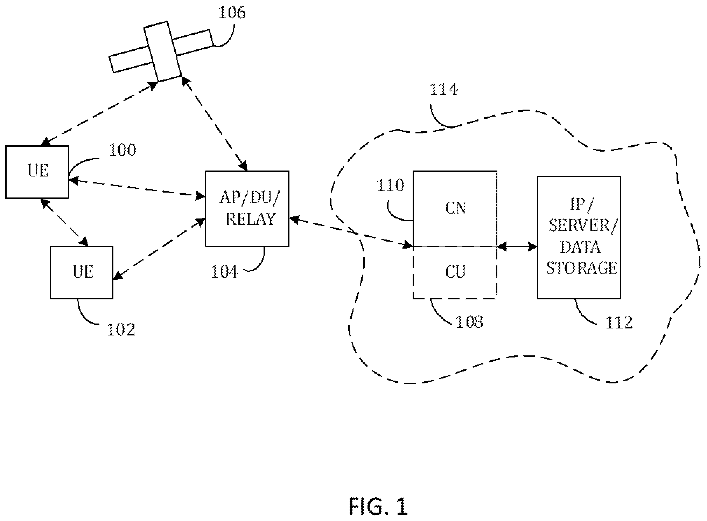

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may comprise also other functions and structures than those shown in FIG. 1. The example of FIG. 1 shows a part of an exemplifying radio access network.

FIG. 1 shows terminal devices 100 and 102 configured to be in a wireless connection on one or more communication channels in a cell with an access node (such as (e/g)NodeB) 104 providing the cell. The access node 104 may also be referred to as a radio access node or node. The physical link from a terminal device to a (e/g)NodeB is called uplink or reverse link and the physical link from the (e/g)NodeB to the terminal device is called downlink or forward link. It should be appreciated that (e/g)NodeBs or their functionalities may be implemented by using any node, host, server or access point etc. entity suitable for such a usage. It is to be noted that although one cell is discussed in this exemplary embodiment, for the sake of simplicity of explanation, multiple cells may be provided by one access node in some exemplary embodiments.

A communication system may comprise more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB may also be referred to as a base station, an access point or any other type of interfacing device including a relay station capable of operating in a wireless environment. The (e/g) NodeB includes or is coupled to transceivers. From the transceivers of the (e/g)NodeB, a connection is provided to an antenna unit that establishes bidirectional radio links to user devices. The antenna unit may comprise a plurality of antennas or antenna elements. The (e/g)NodeB is further connected to core network 110 (CN or next generation core NGC). Depending on the system, the counterpart on the CN side may be a serving gateway (S-GW, routing and forwarding user data packets), packet data network gateway (P-GW), for providing connectivity of terminal devices (UEs) to external packet data networks, or mobile management entity (MME), etc.

The terminal device (also called UE, user equipment, user terminal, user device, etc.) illustrates one type of an apparatus to which resources on the air interface are allocated and assigned, and thus any feature described herein with a terminal device may be implemented with a corresponding apparatus, such as a relay node. An example of such a relay node is a layer 3 relay (self-backhauling relay) towards the base station. Another example of such a relay node is a layer 2 relay. Such a relay node may contain a terminal device part and a Distributed Unit (DU) part. A CU (centralized unit) may coordinate the DU operation via F1AP -interface for example.

The terminal device may refer to a portable computing device that includes wireless mobile communication devices operating with or without a subscriber identification module (SIM), or an embedded SIM, eSIM, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be an exclusive or a nearly exclusive uplink only device, of which an example is a camera or video camera loading images or video clips to a network. A terminal device may also be a device having capability to operate in Internet of Things (IoT) network which is a scenario in which objects are provided with the ability to transfer data over a network without requiring human-to-human or human-to-computer interaction. The terminal device may also utilise cloud. In some applications, a terminal device may comprise a small portable device with radio parts (such as a watch, earphones or eyeglasses) and the computation is carried out in the cloud. The terminal device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications such as (massive) machine-type communications (mMTC), including vehicular safety, different sensors and real-time control. 5G is expected to have multiple radio interfaces, namely below 6GHz, cmWave and mmWave, and also being integratable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G may require to bring the content close to the radio which may lead to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, and/or utilise services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labour between core network operations and base station operations may differ from that of the LTE or even be non-existent. Some other technology that may be used includes for example Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling or service availability in areas that do not have terrestrial coverage. Possible use cases comprise providing service continuity for machine-to-machine (M2M) or Internet of Things (IoT) devices or for passengers on board of vehicles, and/or ensuring service availability for critical communications, and/or future railway/maritime/aeronautical communications. Satellite communication may utilise geostationary earth orbit (GEO) satellite systems, but also low earth orbit (LEO) satellite systems, for example, mega-constellations (systems in which hundreds of (nano)satellites are deployed). A satellite 106 comprised in a constellation may carry a gNB, or at least part of the gNB, that create on-ground cells. Alternatively, a satellite 106 may be used to relay signals of one or more cells to the Earth. The on-ground cells may be created through an on-ground relay node 104 or by a gNB located on-ground or in a satellite or part of the gNB may be on a satellite, the DU for example, and part of the gNB may be on the ground, the CU for example. Additionally, or alternatively, high-altitude platform station, HAPS, systems may be utilized. HAPS may be understood as radio stations located on an object at an altitude of 20-50 kilometers and at a fixed-point relative to the Earth. Alternatively, HAPS may also move relative to the Earth. For example, broadband access may be delivered via HAPS using lightweight, solar-powered aircraft and airships at an altitude of 20-25 kilometers operating continually for several months for example.

It is to be noted that the depicted system is an example of a part of a radio access system and the system may comprise a plurality of (e/g)NodeBs, the terminal device may have an access to a plurality of radio cells and the system may comprise also other apparatuses, such as physical layer relay nodes or other network elements, etc. At least one of the (e/g)NodeBs may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto-or picocells. The (e/g)NodeBs of FIG. 1 may provide any kind of these cells. A cellular radio system may be implemented as a multilayer network including several kinds of cells. In some exemplary embodiments, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. A network which is able to use "plug-and-play" (e/g)NodeBs, may include, in addition to Home (e/g)NodeBs (H(e/g)nodeBs), a home node B gateway, or HNB-GW (not shown in FIG. 1). A HNB Gateway (HNB-GW), which may be installed within an operator's network may aggregate traffic from a large number of HNBs back to a core network.

A non-terrestrial network, NTN, may refer to a network, or a segment of networks, using radio frequency, RF, resources in a satellite or an unmanned aircraft system, UAS. The satellite or UAS may provide service, for example NR service, on Earth via one or more satellite beams and one or more cells, for example NR cells, over a given service area bounded by the field of view of the satellite. There may be a service link, i.e. a radio link, between the satellite and one or more terminal devices within the targeted service area. Furthermore, there may be a feeder link, i.e. a radio link, between the satellite and one or more satellite gateways. The satellite gateway may connect the satellite for example to a public data network. gNB functionality may be comprised for example in the satellite, the gateway, and/or in the data network may comprise access node functionalities, for example gNB functionalities. Non-terrestrial network, NTN, may be supported by 5G standards. For example, a 5G access node, a gNB, may be deployed on board satellites to allow coverage to areas such as those that might otherwise not be covered by a cellular communication network. This may enable 5G signals to be beamed down from space thereby enhancing the terrestrial infrastructure of a wireless communication network. It may also help to improve reliability of wireless communication during disasters such as earthquakes that may damage the terrestrial access nodes for example. It is to be noted that in some alternative embodiments the gNB may be located on ground and have a backhaul connection through the satellite.

Various types of satellites exist. For example, some satellites have been in orbit for decades and may operate 36 000 kilometers above the Earth. Some satellites are considered as Low Earth Orbit, LEO, satellites. Such satellites may operate between 500 and 2000 kilometers above the Earth. Some LEO satellites operate at approximately 600 kilometers above the Earth. A low orbit allows latency to be reduced as the satellite may be in a position that enables to quickly receive and transmit data.

Internet of things, IoT, may be understood as a network of physical objects that are connected to each other and/or the Internet. The physical objects may be apparatuses, that may also be called as IoT devices, that connect to each other using for example cellular communication network. Such apparatuses may be imbedded for example into mobile devices, industrial equipment, environmental sensors and medical devices. Further, such apparatuses may comprise various sensors that produce data related to the respective apparatus that may then be provided to other apparatuses and therefore the apparatuses may be understood to be the things of the IoT. The apparatuses comprised in the IoT may be used to provide an interface between the surrounding physical environment and a digital environment. The apparatuses may have various technical capabilities and some apparatuses used for IoT may be low-cost apparatuses that have limited hardware resources for example.

Cellular communication networks may be utilized for connectivity between apparatuses used in an IoT environment. For example, narrow-band IoT, NB-IoT, is a cellular standard for low-power wide-area, LPWA, machine to machine networks. NB-IoT may be used for low-throughput, delay-tolerant applications, such as meters and sensors. NB-IoT may be deployed for example within an existing LTE band, in guard-band between two regular LTE carriers, or in standalone mode. Also enhanced machine-type communication, eMTC, may be used for IoT and it is optimized lower complexity and/or power, deeper coverage, and higher device density. eMTC may seamlessly coexist with other cellular network services such as regular mobile broadband. It is envisaged that NB-IoT and eMTC may utilize NTN as well.

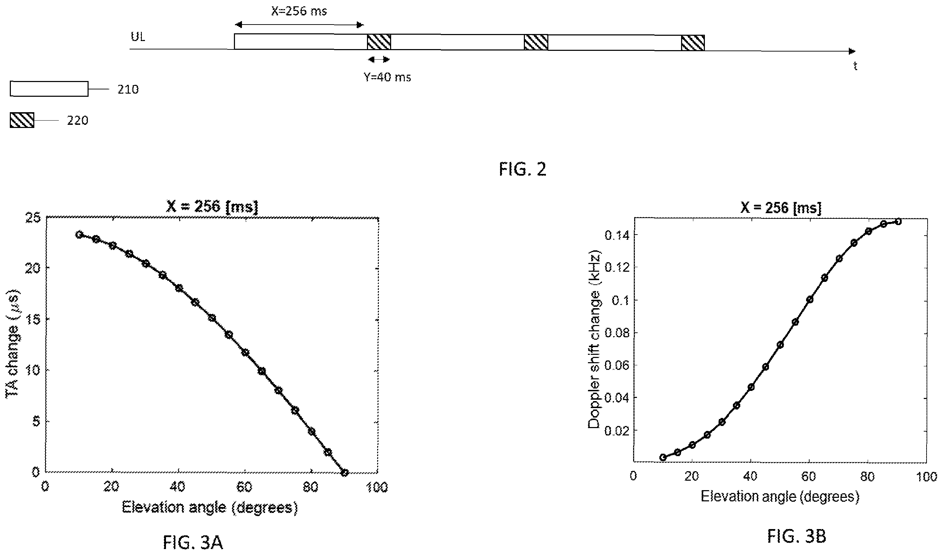

In narrowband physical uplink shared channel, NPUSCH, configuration, repetitions may be used to enhance coverage. With multiple repetitions, a transmission period may be followed by a synchronization period. FIG. 2 illustrates an exemplary embodiment of transmission and synchronization periods, that may be understood as time periods having a pre-determined length. When a terminal device transmits in uplink, UL, a transmission period 210 is followed by a synchronization period 220 after which there is another transmission period 210 followed by another synchronization period 220 and so on. In this exemplary embodiment, the transmission period 210 has duration X that is pre-determined as 256 ms and the synchronization period 220 has duration Y that is pre-determined as 40 ms. It is to be noted that the periods may in some other exemplary embodiments have other durations as well. Thus, in this exemplary embodiment, the NPUSCH is configured to have a total length of the NPUSCH transmission that is less than or equal to 256 ms before the 40 ms gap during which the terminal device performs synchronization by adjusting timing advance, TA, and/or Doppler shift compensation. In this exemplary embodiment, once the TA is determined in the synchronization period 220, the terminal device does not adjust the TA in the transmission period 210. Also, the terminal device does not adjust the TA in the gap if the transmission before and after the gap are part of the same set of repetitions.

In some exemplary embodiments, NB-IoT/eMTC technologies may be deployed in

NTN scenarios such as in a scenario in which different types of satellites are used in a transparent mode and/or in a regenerative mode. A transparent mode may be understood as a mode in which an access node, such as a gNB, remains on the Earth and the satellites relay signals. A regenerative mode may be understood as a mode in which the access node, such as the gNB, is payload on the satellite. The IoT NTN may therefore be understood to refer to a deployment in which IoT technologies are deployed in NTN in which the LEO or GEO satellites will provide a service coverage for a terminal device on the ground.

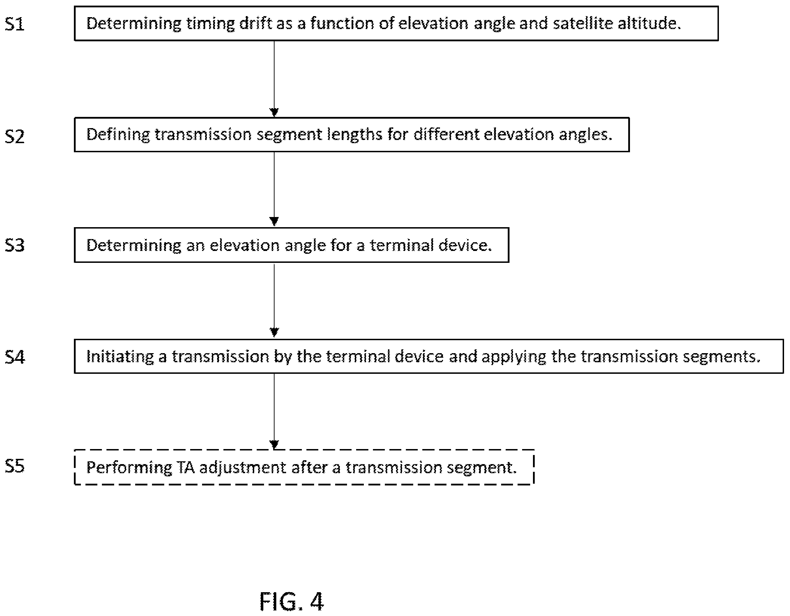

In IoT NTN, the LEO satellite orbital velocity may be for example around 7,800 m/s. The high moving speed of a satellite incurs large changes in Doppler shift and timing advance, TA, values. The TA values may be values in terms of time such as microseconds. FIG. 3A illustrates a diagram regarding an exemplary embodiment of how the amount of the TA value may change during a transmission period of X = 256 ms at different elevation angles from 10 to 90 degrees. In this exemplary embodiment the altitude of a LEO satellite is 600 km, the beam radius is 100 km, and the carrier frequency is 2 GHz. In FIG. 3A the TA value change, $\Delta$TA, is defined as the difference between the initial TA value at the given elevation angle and new TA value after a transmission time period. For example, as can be seen from FIG. 3A, the amount of TA value change is exceeding the maximum tolerance, i.e., a half of cyclic prefix, CP, length. The half of the CP length in this exemplary embodiment is 2.35 $\mu$s. In this exemplary embodiment, if the NPUSCH configuration uses the initial TA over the transmission time period X, the TA value change during the transmission period results in a large TA error. Thus, the terminal device will be in the uplink out-of-synchronization state, which may cause significant interference at the receiving end of the transmission. FIG. 3B illustrates a graph according to an exemplary embodiment of a Doppler shift change during a transmission period of 256 ms. In FIG. 3B, it can be seen that the impact of satellite's high speed on Doppler shift is relatively marginal in that the Doppler shift error is smaller than a subcarrier spacing, SCS, 15 kHz. Hence, to enhance the time synchronization of IoT in NTN, it is beneficial to mitigate the impact of large TA changes during a long transmission period. To mitigate the impact of large TA changes during a long transmission period, a transmission period may be split. The splitting may be such that the timing drift within a segment does not violate timing requirements, and thus it may be based on cyclic prefix, CP, for example. FIG. 4 illustrates a flow chart according to an exemplary embodiment of such splitting of a transmission period. First, in S1, a network determines the timing drift as a function of elevation angle and satellite altitude. The network may be for example an access node comprised in the network, another component comprised in the network, such as the 5G network, or a combination of network components such as those described in the exemplary embodiment of FIG. 1. Next, in S2, the network defines lengths for transmission segments comprised in the transmission period that is split into segments. These lengths are defined as a function of elevation angle. For example, a first time period, P1, may be defined for a first elevation angle and a second time period, P2, may be defined for a second elevation angle. Optionally, the network may provide an indexed table with lengths of segments comprised in the transmission period and elevation angles to the terminal device. The providing may be performed for example by transmitting the indexed table via broadcasting or using signaling specific to the terminal device.

Then, in S3, an elevation angle is determined for the terminal device. The elevation angle may be determined prior to scheduling an uplink transmission. An uplink transmission may comprise data or information. Optionally, the terminal device may transmit its location and/or elevation angle to the network. Alternatively, the network may obtain the location and/or elevation angle of the terminal device using other suitable means. After determining the elevation angle at a start of an upcoming transmission, the network may indicate to the terminal device which index of the indexed table to use in case the indexed table has been transmitted to the terminal device. Alternatively, the network may provide information regarding the index, for example the segment length, to the terminal device. Also, optionally, the terminal device may determine its elevation angle based on its global navigation satellite system, GNSS, information and satellite ephemeris data, and may select a corresponding index of the indexed table if the indexed table has been transmitted, by the network, for example by the access node, to the terminal device. The terminal device may then transmit information regarding the elevation angle and/or selected index to the network. The information may be transmitted prior to the uplink transmission performed by the terminal device to the network, for example, to the access node such as a gNB. Further, optionally, the terminal device and/or the network may select or define multiple indices of the indexed table for subsequent transmissions that are to be performed by the terminal device to the network. It is to be note that the choice of segment length may impact the number of repetitions accommodated in a transmission period and therefore, if the terminal device has selected an index autonomously, the network may have to adjust the scheduling.

In S4 then the terminal device initiates the uplink transmission and applies the transmission segments. Optionally, in S5, the terminal device may also perform necessary TA adjustment after a transmission segment. The TA adjustment may also be performed after each transmission segment. As the network is aware of the applied transmission segment length, it may determine when the transmission ends and await reception of the next timing-advance adjustment transmission.

As described above, the satellites move at high velocity, which may incur a significant TA change during uplink transmission of packets, that may be data packets. This change in TA therefore is to be adjusted to keep the uplink timing error within a tolerance that may be a pre-determined tolerance such as less than half a cyclic prefix length. For example, when a transmission period with repetitions is 256 ms, multiple TA adjustments may be required for a terminal device, that performs the uplink transmission of packets, with low elevation angles towards a satellite. The adjustment may be performed for example by splitting the transmission period into multiple segments that enable the terminal device to perform TA adjustments that counter the TA drift caused by the movement of the satellite.

It is to be noted that a transmission period may comprise one or more transmission segments and one or more TA adjustment periods. A TA adjustment period may also be understood as a TA adjustment gap or a segment for timing advance adjustment. The TA adjustment period may occur in-between two transmission segments, after a transmission segment and/or before a transmission segment for example. It is also to be noted that the elevation angle of the terminal device may be the elevation angle with a serving satellite when the terminal device is being served by an access node comprised in an NTN.

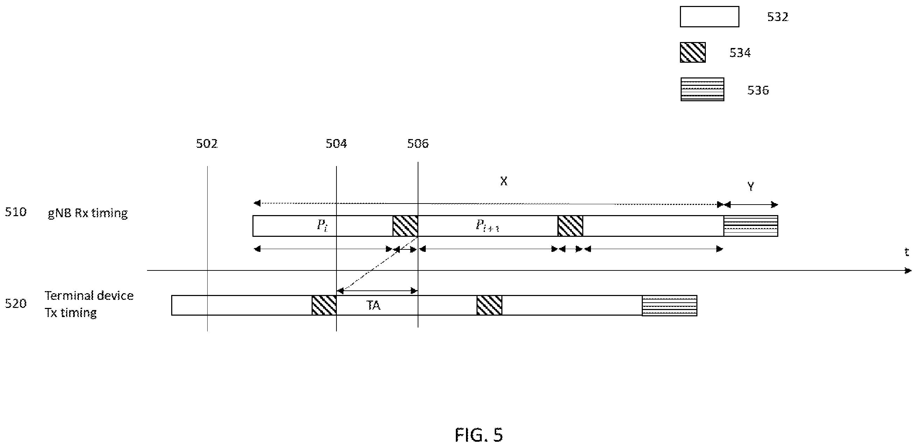

FIG. 5 illustrates an exemplary embodiment of segmenting a transmission period. In this exemplary embodiment, the transmission period is denoted as X and the synchronization period that follows the transmission period X is denoted as Y. In this exemplary embodiment, the total duration of the transmission period X, which may be for example 256 ms, is partitioned into multiple segments 532 of transmission period. A segment of transmission period may be denoted as $P_i$, in which i indicates the i-th segment. Between two segments 532, there are TA adjustment periods 534. TA adjustment periods may also be denoted as W. In FIG. 5 a timeline is illustrated. Along the timeline there is also illustrated the timing in terms of timings of segments comprised in the transmission period in view of the terminal device 520 and timings of segments comprised in the transmission period in view of an access node 510 that in this exemplary embodiment is a gNB. The access node is comprised in a network.

The lengths of the adjustment periods 534 may depend on the length of the transmission period, satellite altitude and/or elevation angles. Further, if there are many short segments 532 of the transmission period, the adjustment periods 534 may correspondingly be shorter compared to if the segments 532 of the transmission period had longer duration in which case the adjustment periods 534 may correspondingly have longer duration. This is applicable when the TA drift is maintained in a similar manner for short and long durations of transmission period. The duration of the adjustment periods 534 is further to be determined such that it is sufficient to accommodate the change of TA during a transmission period segment 532.

In this exemplary embodiment, in UL transmission, a timing misalignment within an orthogonal frequency division multiplexing, OFDM symbol's CP length may be tolerated. Thus, a timing advance error of the terminal device is to be within the range of [-1/2, 1/2] CP length. For a link that is time-synchronized, the TA is to be adjusted before it is drifted away by one half of the CP length. For example, when CP length is 4.7 $\mu$s, as may be in case of NB-IoT, a TA error less than 2.35 $\mu$s does not affect uplink data reception. Therefore, the TA change during a period of continuous UL transmission should be kept under the error tolerance of 2.35 $\mu$s in a NB-IoT system. The TA change is dependent on elevation angle as was discussed above. For example, the magnitude of $\Delta$TA is higher at a lower elevation angle due to the TA drift rate being high at a low elevation angle. Therefore, a proper length of the transmission segment period may be determined based on the elevation angle such that the ΔTA is kept within the tolerance.

In FIG. 5, a time instance 502 is illustrated during which the first transmission segment 532 of the transmission period is ongoing at the terminal device, but at the access node the first segment 532 has not yet begun. At the time instant 504, the time adjustment period 534 at the terminal device has ended while at the access node the segment 532 is still ongoing. Then at the time instant 506 the first adjustment period 534 at the access node has ended while the second segment 532 is ongoing at the terminal device. The time period between the time instant 504 and 506 may be understood as the TA in this exemplary embodiment.

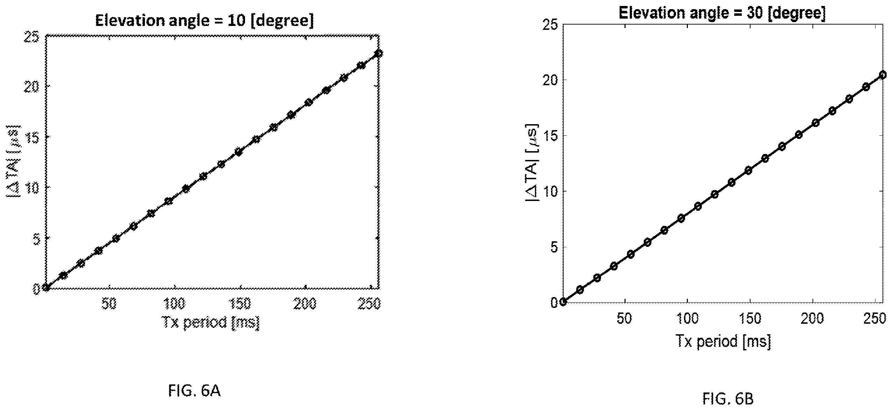

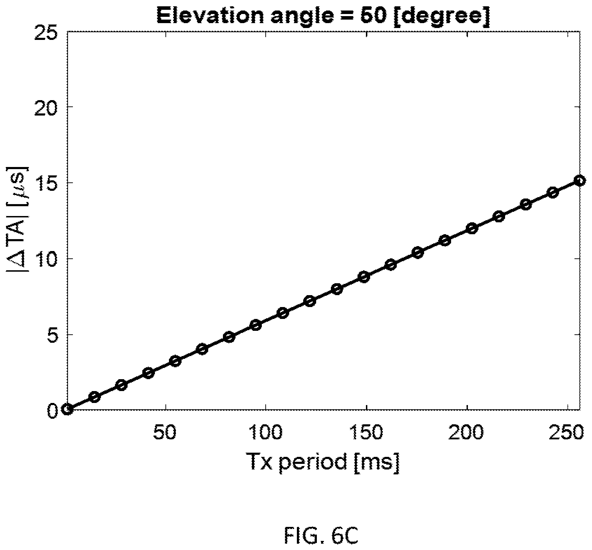

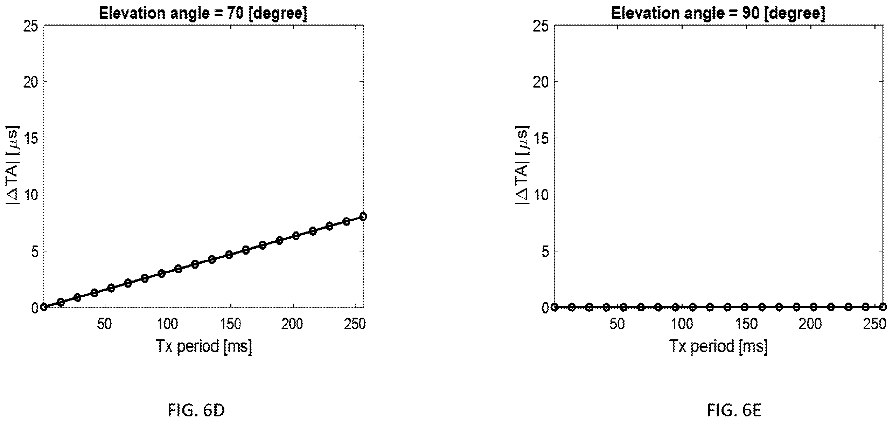

FIGs 6A-6E illustrate TA changes for different transmission periods at different elevation angles. The elevation angles vary from 10 to 90 degrees in these illustrations and a terminal device is connected with a LEO satellite at an altitude of 600 km. The elevation angle of the terminal device may be used to determine a setting for the time period to be applied to a segment of the transmission period. First, in FIG. 6A, there is a graph illustrating an initial elevation angle of 10 degrees. In FIG. 6B there is a graph illustrating an initial elevation angle of 30 degrees. In FIG. 6C there is a graph illustrating an initial elevation angle of 50 degrees. In FIG. 6D there is a graph illustrating an initial elevation angle of 70 degrees and in FIG. 6E there is a graph illustrating an initial elevation angle of 90 degrees. As is illustrated in FIGs 6A-6E, the maximum transmission period satisfying the condition may be formulated as $|\Delta TA| \leq 2.35\,\mu s$. The maximum transmission periods of different initial elevation angles, according to the exemplary embodiment, are also illustrated in Table 1 below.

Table 1

| Setting index | Elevation angle | Segment length | Number of segments in X | Adjustment gap W |
|---|---|---|---|---|
| 1 | 10 | 25.7 ms | floor(256/25.7) = 9 | 3.0875 ms |
| 2 | ... | ... | ... | ... |
| ... | 30 | 29.3 ms | floor(256/29.3) = 8 | 3.0857 ms |
| ... | ... | ... | ... | ... |
| ... | 50 | 39.5 ms | floor(256/39.5) = 6 | 3.8 ms |
| ... | ... | ... | ... | ... |
| ... | 70 | 74.5 ms | floor(256/74.5) = 3 | 16.25 ms |
| N-1 | ... | ... | ... | ... |
| N | 90 | 256 ms | floor(256/256) = 1 | 0 ms |

In Table 1 each row contains the index, elevation angle, which may also be a range of elevation angles, segment length, number of segments, and adjustment gap W. In this exemplary embodiment, the segment length, number of segments, and adjustment gap can be adjusted if the condition W>|ΔTA| is satisfied. Therefore, there also exist multiple examples satisfying the given condition. Table 1 may be defined by the network, for example by the gNB or by any other suitable component of the network, to define a pattern for the transmission period. The pattern may be understood as the lengths of the transmission segments, TA adjustment periods and synchronization periods. In this exemplary embodiment, the maximum length of each transmission segment period may be determined. For example, the second column of Table 1 defines the initial elevation angle, and the third column of Table 1 defines the maximum transmission segment period length with respect to the initial elevation angle, based on complying with the half cyclic prefix limit. The maximum transmission period may be for example the duration of $P_i$. In this exemplary embodiment, in each transmission segment, the lowest elevation angle may be used to determine the segment length. This may be as the lower the elevation angle, the shorter the segment should be. In the fourth column of in Table 1, the number of required TA adjustments between segments in the total transmission period X are defined. Further, the first column of Table 1, in this exemplary embodiment, defines the index of each predefined mode indicating the segment length and the number of TA adjustments. Thus, Table 1 may be used by the terminal device such that it uses the index to adjust the TA without receiving a TA command, TAC, from network, for example, from the access node. Also, when using Table 1, different segment settings may be used during the same transmission period X.

Table 2

| Setting index | Elevation angle | Segment length*, L [unit time**] | Number of segments in X, $N_{segment}$ | Adjustment gap W [ms] |
|---|---|---|---|---|
| 1 | 10 | 51 | 10 | 0.11 |
| 2 | ... | ... | ... | ... |
| ... | 30 | 58 | 8 | 3.43 |
| ... | ... | ... | ... | ... |
| ... | 50 | 79 | 6 | 3.8 |
| ... | ... | ... | ... | ... |
| ... | 70 | 149 | 3 | 16.25 |
| N-1 | ... | ... | ... | ... |
| N | 90 | 512 | 1 | 0 |

Table 2 is another example of an indexed table and may also be considered as another version of Table 1. In Table 2 the format of the segment length and gap may be represented in integers, and also segment length may be based on the radio unit, RU, length as shown in Table 2. In Table 2, it is assumed that the time unit of RU (7 symbols) is one slot of 0.5 ms duration when SCS is 15 kHz. By using this unit time, the segment length is presented as an integer value in the 3$^{rd}$ column of the table.

The values in Table 1 or 2 can be readily adjustable if the sum of all segment periods and adjustment gaps equals to the transmission period X. For instance, this condition may be shown as

$$L * T_{unit} * N_{segment} + \quad W * (N_{segment} -1) = X$$

where $L$ is the segment length, $T_{unit}$ is the time unit, $N_{segment}$ is the number of segments in $X$, and $W$ is the adjustment gap. Table 1 and 2 are examples that satisfy the condition above. In those examples, $L$ is derived from the timing error tolerance and the TA drift rate at the given elevation angle. After $L$ is determined, $N_{segment}$ can be computed according to $N_{segment}$ = $floor(X/(L*T_{unit}))$, and the remainder is evenly divided into $(N_{segment} -1)$ adjustment gaps. Alternative configuration tables may be derived in a corresponding manner considering the required timing error tolerance and RU length.

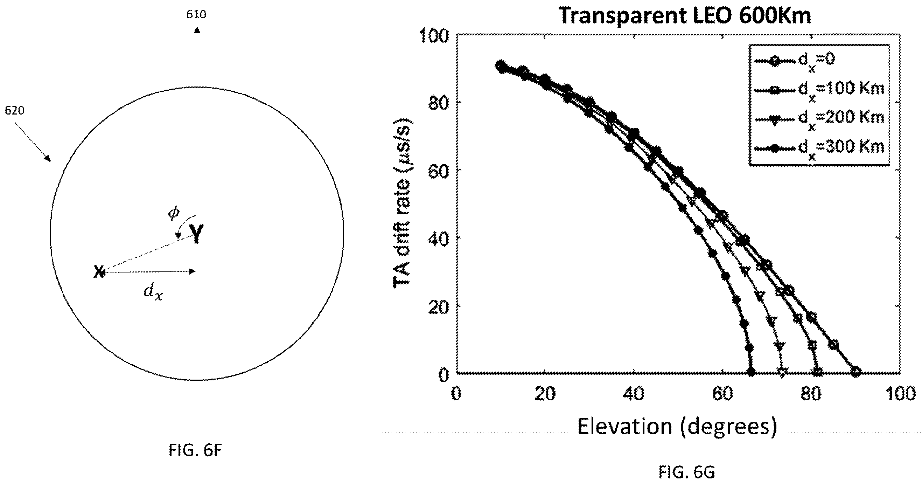

In FIG. 6F the movement of the satellite, which in this exemplary embodiment is the serving satellite, is illustrated by the arrow 610. The circle 620 illustrates the footprint of the serving satellite. In the exemplary embodiments described above, the terminal device has been located directly below the orbit of the serving satellite. The location is denoted by Y in FIG. 6F. This may lead to a worst-case scenario as in this location the TA may change most rapidly. Yet, if the terminal device is located at one side of the orbit, such as in the position denoted by X, the terminal device may experience a slower change of TA and also not see the satellite reach 90-degree elevation angle. In such a case, the position x relative to the satellite orbit may be described via an azimuth angle $\phi$, as shown in FIG. 6F, in addition to the elevation angle. As the maximum elevation angle of the terminal device in such exemplary embodiment is lower than 90 degree, for a given azimuth angle, multiple versions of an indexed table such as Table 1 may be calculated by the network. Thus, by using a report from the terminal device regarding its elevation angle and/or location and/or azimuth angle, the network may know or estimate the azimuth angle of the terminal device and, based on the azimuth angle, decides the most suitable table among the multiple versions of tables.

FIG. 6G illustrates an exemplary graph of an evaluation of the impact of using an azimuth angle as described above. In the graph, $d_x$ represents the distance from the terminal device to the satellite's moving path on the ground. As can be seen, when the distance is 0, as is the case for example in the position Y illustrated in FIG. 6G, the terminal device sees the largest drift rate. An advantage of using an azimuth angle is that the segment lengths may further be tailored to the specific TA change, thus instead of optimizing for the worst-case scenario $d_x$=0 (or azimuth angle = 0) it allows to apply suitable knowledge to the exact TA drift rate, which improves the system's spectral efficiency.

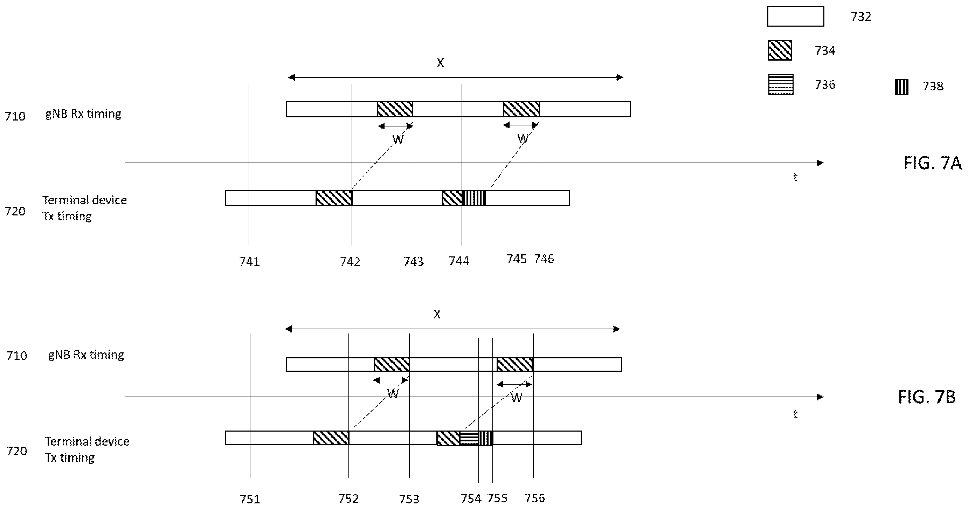

FIGs 7A and 7B illustrate exemplary embodiments in which a terminal device performs TA adjustment during a TA adjustment period 734 that occurs after a segment 732 of a transmission period X. The adjustments may be performed based on Table 1 for example. The transmission pattern 710 illustrates the segments comprised in the transmission period with regards to the access node and the transmission pattern 720 illustrates the segments comprised in the transmission period with regard to the terminal device. In the exemplary embodiment of FIG. 7A the terminal device adjusts the TA to be shorter. The first TA occurs between the time instants 742 and 743. After the second segment 732, the TA adjustment is performed during the TA adjustment period 734 such that the second TA period begins after the duration of the adjusted segment 738 and ends at the time instant 746. In comparison, the first TA occurs between the time instants 744 and 746. Thus, the second TA is shorter than the first TA.

In the exemplary embodiment of FIG. 7B the terminal device adjusts the TA to be longer. The first TA occurs between the time instants 752 and 753. After the second segment 732, the TA adjustment is performed during the TA adjustment period 734 such that the second TA period begins before the end of the duration of the second TA adjustment period 734, that is, before the time instant 754. The duration between the end of the second TA adjustment period and the time instant 754 is illustrated as 736. In comparison, the first TA occurs between the time instants 754 and 756. Thus, the second TA is longer than the first TA.

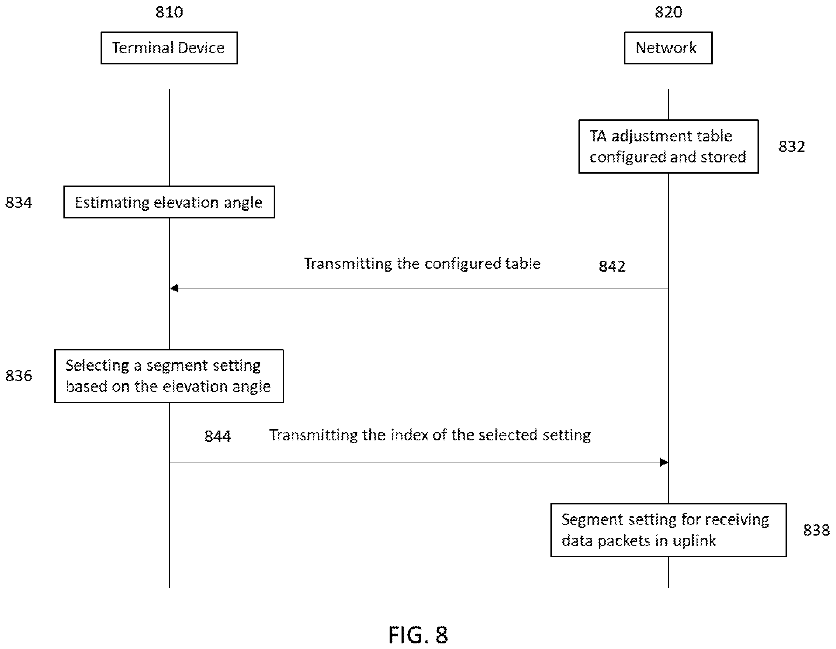

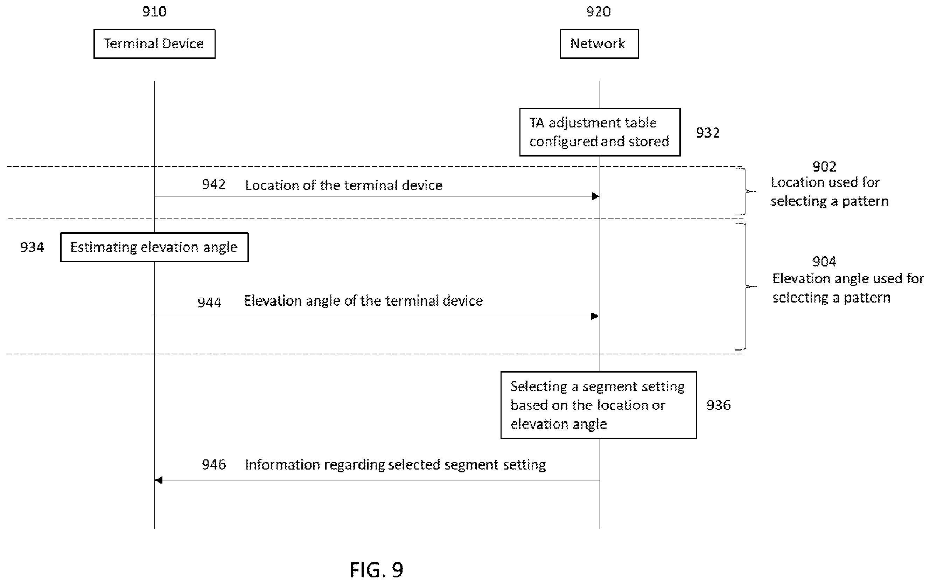

As an indexed table such as Table 1 may be determined by a network, for example by an access node, the table, or information comprised in the table may be shared by the access node to a terminal device. Based on the indexed table, lengths of segments comprised in a transmission period may be determined and the terminal device and the network may share signaling regarding determining the lengths of the segments of the transmission period. FIG. 8 and FIG. 9 illustrate flow charts of such signaling according to two different exemplary embodiments.

In the exemplary embodiment of FIG. 8 there is signaling between a terminal device 810 and network 820. In this exemplary embodiment, an access node comprised in the network 820 transmits and receives the signaling. First, the network defines an indexed table such as Table 1 as indicated in 832. The indexed table may be defined by one or more components of the network, for example, by the access node. The indexed table is for adjusting TA, by defining durations for segments comprised in a transmission period, and defining the indexed table comprises configuring and storing the indexed table. The terminal device on the other hand estimates its elevation angle as is illustrated in 834. The terminal device 810 may estimate its elevation angle with the satellite based on its location that is obtained based on GNSS and satellite ephemeris for example.

The network 820 transmits 842 the indexed table it defined to the terminal device 810 and thus the terminal device 810 obtains the indexed table that is used for adjusting TA as it defines durations for segments comprised in the transmission period at various elevation angles. In this exemplary embodiment, the terminal device 810 obtains the table from the access node such as a gNB. The terminal device may then select, from the obtained indexed table, a setting according to which it performs the adjustment of the durations of the segments to adjust the TA. The setting may be selected based on the estimated elevation angle as is illustrated in 836 or based on the estimated elevation angle and an azimuth angle of the terminal device. The setting is thus applicable to the estimated elevation angle of the terminal device. The terminal device 810 then transmits 844 an indication of the index of the selected setting to the network 820, that is, in this exemplary embodiment, the indication is transmitted to the access node. The network 820 then sets the setting according to the indication received and based on the indexed table to receive uplink packets transmitted by the terminal device 810 as is illustrated in 838. This signaling between the terminal device 810 and the network 820 allows the network to know when a segment of a transmission period ends and to enable the network to determine how many repetitions it may schedule within the transmission period.

FIG. 9 illustrates another signaling flow chart. This flow chart is according to an exemplary embodiment in which a network 920 determines settings for segments comprised in a transmission period for adjusting a TA by defining durations for the segments comprised in the transmission period based on location of a terminal device 910 or an elevation angle of the terminal device 910. In this exemplary embodiment, an access node comprised in the network 920 transmits and receives the signaling. First, the network 920 defines an indexed table such as Table 1 as indicated in 932. The indexed table may be defined by one or more components of the network 920, for example, by the access node. The indexed table is for adjusting TA by adjusting durations of the segments comprised in the transmission period and defining the indexed table comprises configuring and storing the indexed table. The network 920 may then use either a location of the terminal device 910, as is illustrated in 901, or an elevation angle of the terminal device 910, as is illustrated in 904, to select a setting, from the indexed table, for adjusting the TA by adjusting the duration of the segments. If the location is used, then the terminal device 910 transmits 942 a first indication that indicates its location to the access node. Thus, the access node obtains the location of the terminal device 910 by receiving the first indication. If the elevation angle of the terminal device 910 is used, then the terminal device 910 estimates its elevation angle as is illustrated in 934. The terminal device 910 may estimate its elevation angle with the satellite based on its location that is obtained based on GNSS and satellite ephemeris for example. The terminal device 910 may then transmit 944 a second indication indicating its elevation angle to the access node. Thus, the access node may obtain the elevation angle of the terminal device by receiving the second indication.

Next, the network 920 selects, from the indexed table, a setting for adjusting a TA by adjusting the duration of the segments as illustrated in 936. This may be performed by any suitable one or more components of the network 920. In this exemplary embodiment, the selection is performed by the access node. For the network 920 to be able to perform the selection, the network is to be aware of the elevation angle or location of the terminal device 910 as described above or of the distance of the terminal device to the satellite. If the selection is performed based on the location, the setting may be selected from the indexed table based on an estimation of the elevation angle that the network 920 may estimate based on the location of the terminal device 910 and ephemeris data of the satellite.

Alternatively, the network 920 has obtained the estimated elevation angle as described above and based on the obtained estimation of the elevation angle selects the setting for adjusting the TA. Thus, the setting is applicable to the elevation angle of the terminal device. The network 920 then transmits 946 information regarding the selecting setting for adjusting the TA to the terminal device 910.

In the exemplary embodiments above, to inform the terminal device regarding the selected pattern for adjusting the TA by defining durations of the segments comprised in a transmission periods, the network may first share the indexed table via broadcasting, or it may use RRC signaling specific to the terminal device. The network may then transmit an indication regarding the index of the selected settings for the segments in the indexed table, i.e., 1st column of the indexed table such as Table 1. For example, when the indexed table for defining segment durations is sent from the network to the terminal device via RRC, the network may indicate the index of the selected segment durations in the table to terminal device via downlink control information, DCI, for UL grant. Alternatively, instead of transmitting the index, the network may transmit the row of the table that corresponds to the selected index. This information may be transmitted to the terminal device via MAC Control Element, MAC CE, or RRC message. Also, to improve the signaling efficiency, the information to may comprise segment size covering multiple time intervals if the satellite movement is predictable and mobility of the terminal device is low, for example, during the first time interval, the selected segment equals to a; during the second time interval, the selected segment equals to b and so on.

The exemplary embodiments described above may be applicable to NB-IoT and eMTC for example. The exemplary embodiments described above may also have advantages such as limiting interference as splitting the transmission period into segments allows a terminal device to comply with timing requirements of the transmission. Also, as the signaling may refer to an indexed table regarding lengths of the segments within the transmission period and an indication of applicable elevation angle, the signaling is efficient and may be transmitted as broadcasting or terminal device specific signaling.

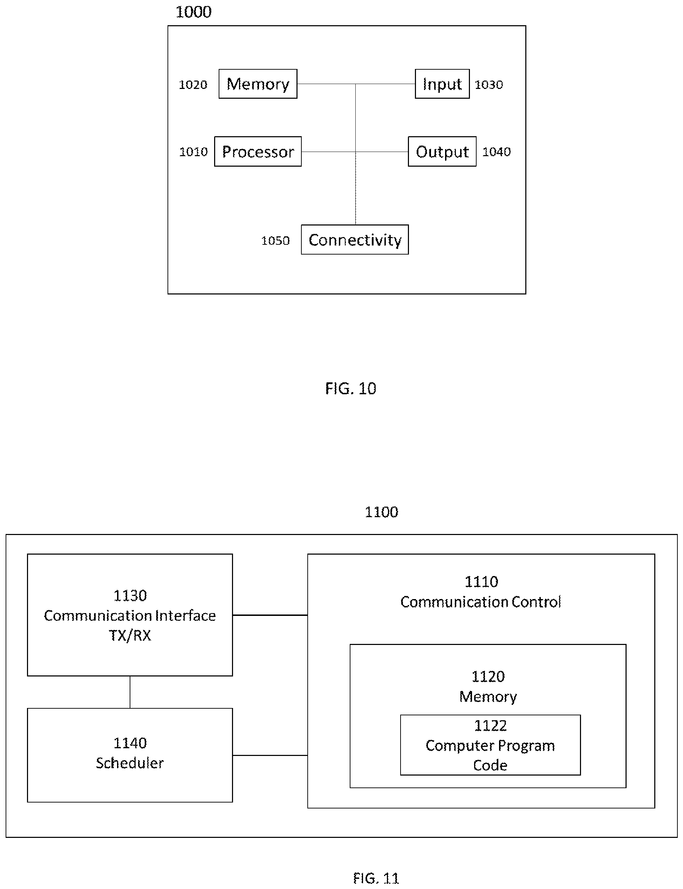

FIG. 10 illustrates an apparatus 1000, which may be an apparatus such as, or comprised in, a terminal device, according to an example embodiment. The apparatus 1000 comprises a processor 1010. The processor 1010 interprets computer program instructions and processes data. The processor 1010 may comprise one or more programmable processors. The processor 1010 may comprise programmable hardware with embedded firmware and may, alternatively or additionally, comprise one or more application specific integrated circuits, ASICs.

The processor 1010 is coupled to a memory 1020. The processor is configured to read and write data to and from the memory 1020. The memory 1020 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 1020 stores computer readable instructions that are execute by the processor 1010. For example, non-volatile memory stores the computer readable instructions and the processor 1010 executes the instructions using volatile memory for temporary storage of data and/or instructions.

The computer readable instructions may have been pre-stored to the memory 1020 or, alternatively or additionally, they may be received, by the apparatus, via electromagnetic carrier signal and/or may be copied from a physical entity such as computer program product. Execution of the computer readable instructions causes the apparatus 1000 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 1000 further comprises, or is connected to, an input unit 1030. The input unit 1030 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 1030 may comprise an interface to which external devices may connect to.

The apparatus 1000 also comprises an output unit 1040. The output unit comprises or is connected to one or more displays capable of rendering visual content such as a light emitting diode, LED, display, a liquid crystal display, LCD. The output unit 1040 may further comprise one or more audio outputs. The one or more audio outputs may be for example loudspeakers or a set of headphones.

The apparatus 1000 may further comprise a connectivity unit 1050. The connectivity unit 1050 enables wired and/or wireless connectivity to external networks. The connectivity unit 1050 may comprise one or more antennas and one or more receivers that may be integrated to the apparatus 1000 or the apparatus 1000 may be connected to. The connectivity unit 1050 may comprise an integrated circuit or a set of integrated circuits that provide the wireless communication capability for the apparatus 1000. Alternatively, the wireless connectivity may be a hardwired application specific integrated circuit, ASIC.

It is to be noted that the apparatus 1000 may further comprise various component not illustrated in the FIG. 10. The various components may be hardware component and/or software components.

The apparatus 1100 of FIG. 11 illustrates an example embodiment of an apparatus that may be an access node or be comprised in an access node. The apparatus may be, for example, a circuitry or a chipset applicable to an access node to realize the described embodiments. The apparatus 1100 may be an electronic device comprising one or more electronic circuitries. The apparatus 1100 may comprise a communication control circuitry 1110 such as at least one processor, and at least one memory 1120 including a computer program code (software) 1122 wherein the at least one memory and the computer program code (software) 1122 are configured, with the at least one processor, to cause the apparatus 1100 to carry out any one of the example embodiments of the access node described above.

The memory 1120 may be implemented using any suitable data storage technology, such as semiconductor-based memory devices, flash memory, magnetic memory devices and systems, optical memory devices and systems, fixed memory and removable memory. The memory may comprise a configuration database for storing configuration data. For example, the configuration database may store current neighbour cell list, and, in some example embodiments, structures of the frames used in the detected neighbour cells.

The apparatus 1100 may further comprise a communication interface 1130 comprising hardware and/or software for realizing communication connectivity according to one or more communication protocols. The communication interface 1130 may provide the apparatus with radio communication capabilities to communicate in the cellular communication system. The communication interface may, for example, provide a radio interface to terminal devices. The apparatus 1100 may further comprise another interface towards a core network such as the network coordinator apparatus and/or to the access nodes of the cellular communication system. The apparatus 1100 may further comprise a scheduler 1140 that is configured to allocate resources.

Even though the disclosure has been described above with reference to an example according to the accompanying drawings, it is clear that the disclosure is not restricted thereto but can be modified in several ways within the scope of the appended claims.

**Claims**

1. An apparatus, comprised in a terminal device (100, 102), the apparatus comprising:

   means for obtaining settings that define, for an estimated elevation angle of the terminal device with a serving satellite, durations of segments comprised in a transmission period, wherein the segments comprise at least one transmission segment and at least one segment for timing advance adjustment; and
   means for transmitting an uplink transmission to an access node comprised in a non-terrestrial network, during the at least one transmission segment according to the setting applicable to the estimated elevation angle of the terminal device; and
   means for performing timing advance adjustment after a transmission segment during the at least one segment for timing advance adjustment according to the setting applicable to the estimated elevation angle of the terminal device.

2. An apparatus according to claim 1, wherein the obtained settings are defined also for an azimuth angle of a terminal device with the serving satellite.

3. An apparatus according to claim 1 or claim 2, further comprising means for estimating the elevation angle of the terminal device with the serving satellite.

4. An apparatus according to claim 3, further comprising means for estimating the elevation angle based on a location of the terminal device obtained from a global navigation satellite system and a satellite ephemeris.

5. An apparatus according to claim 3 or 4, further comprising means for transmitting an indication indicating the estimated elevation angle to the access node.

6. An apparatus according to claim 5, wherein the indication comprises an index of an indexed table transmitted by the access node.

7. An apparatus according to any one of the previous claims, further comprising means for obtaining, from the access node, an indexed table comprising the settings that define, for the estimated elevation angle of the terminal device, the durations of the segments comprised in the transmission period.

8. An apparatus according to claim 7, wherein the settings further define timing advance values to be applied in each segment.

9. An apparatus according to claim 7 or 8, further comprising means for obtaining, from the access node, an indication of an index, of the indexed table, that corresponds to the settings that define, for the estimated elevation angle of the terminal device, the durations of the segments comprised in the transmission period.

10. An apparatus, comprised in an access node (104) comprised in a non-terrestrial network, the apparatus comprising:

means for defining an indexed table that defines a setting that defines durations of segments comprised in a transmission period, wherein the segments comprise at least one transmission segment and at least one segment for timing advance adjustment, and wherein the indexed table comprises a plurality of ranges of elevation angles of a terminal device with a serving satellite, with corresponding settings;
means for obtaining an indication regarding an index that defines the setting that is applicable to the elevation angle of the terminal device;
means for scheduling a transmission, wherein the transmission is an uplink transmission; and
means for receiving the transmission from the terminal device according to the setting that is applicable to the elevation angle of the terminal device.

11. An apparatus according to claim 10, wherein the setting is defined also for an azimuth angle of the terminal device with the serving satellite.

12. An apparatus according to claim 10 or 11, further comprising means for transmitting the indexed table to the terminal device.

13. An apparatus according to claim 12, further comprising means for estimating the elevation angle and the azimuth angle of the terminal device based on the location of the terminal device and satellite ephemeris data.

14. An apparatus according to claim 13, further comprising means for determining, based on the indexed table, settings corresponding to the estimated elevation angle and the estimated azimuth angle and means for transmitting information regarding the settings corresponding to the estimated elevation angle to the terminal device.

15. An apparatus according to claim 10, further comprising means for obtaining, from the terminal device, an estimation of the elevation angle and an estimation of an azimuth angle, or means for obtaining the indication regarding the index that defines the setting that is applicable to the elevation angle of the terminal device.

**Patentansprüche**

1. Vorrichtung, umfasst in einem Endgerät (100, 102), wobei die Vorrichtung umfasst:

Mittel zum Erhalten von Einstellungen, die für einen geschätzten Elevationswinkel des Endgeräts mit einem bedienenden Satelliten Dauern von Segmenten definieren, die in einer Übertragungsperiode umfasst sind, wobei die Segmente mindestens ein Übertragungssegment und mindestens ein Segment für die Laufzeitvorhaltsanpassung umfassen; und
Mittel zum Senden einer Aufwärtsstreckenübertragung an einen Zugangsknoten, der in einem nicht-terrestrischen Netzwerk umfasst ist, während des mindestens einen Übertragungssegments gemäß der Einstellung, die auf den geschätzten Elevationswinkel des Endgeräts anwendbar ist; und
Mittel zum Durchführen einer Laufzeitvorhaltsanpassung nach einem Übertragungssegment während des mindestens einen Segments für die Laufzeitvorhaltsanpassung gemäß der Einstellung, die auf den geschätzten Elevationswinkel des Endgeräts anwendbar ist.

2. Vorrichtung nach Anspruch 1, wobei die erhaltenen Einstellungen auch für einen Azimutwinkel eines Endgeräts mit dem bedienenden Satelliten definiert sind.

3. Vorrichtung nach Anspruch 1 oder Anspruch 2, ferner umfassend Mittel zum Schätzen des Elevationswinkels des Endgeräts mit dem bedienenden Satelliten.

4. Vorrichtung nach Anspruch 3, ferner umfassend Mittel zum Schätzen des Elevationswinkels auf der Grundlage einer Position des Endgeräts, die von einem globalen Navigationssatellitensystem erhalten wurde, und von Satellitenephemeridendaten.

5. Vorrichtung nach Anspruch 3 oder 4, ferner umfassend Mittel zum Senden einer Angabe, die den geschätzten Elevationswinkel anzeigt, an den Zugangsknoten.

6. Vorrichtung nach Anspruch 5, wobei die Angabe einen Index einer indizierten Tabelle umfasst, die vom Zugangsknoten gesendet wird.

7. Vorrichtung nach einem der vorhergehenden Ansprüche, ferner umfassend Mittel zum Erhalten, vom Zugangsknoten, einer indizierten Tabelle, die die Einstellungen umfasst, die für den geschätzten Elevationswinkel des Endgeräts die Dauern der Segmente definieren, die in der Übertragungsperiode umfasst sind.

8. Vorrichtung nach Anspruch 7, wobei die Einstellungen ferner Laufzeitvorhaltswerte definieren, die in jedem Segment anzuwenden sind.

9. Vorrichtung nach Anspruch 7 oder 8, ferner umfassend Mittel zum Erhalten, vom Zugangsknoten, einer Angabe eines Index der indizierten Tabelle, der den Einstellungen entspricht, die für den geschätzten Elevationswinkel des Endgeräts die Dauern der Segmente definieren, die in der Übertragungsperiode umfasst sind.

10. Vorrichtung, umfasst in einem Zugangsknoten (104), der in einem nicht-terrestrischen Netzwerk umfasst ist, wobei die Vorrichtung umfasst:

Mittel zum Definieren einer indizierten Tabelle, die eine Einstellung definiert, die Dauern von Segmenten definiert, die in einer Übertragungsperiode umfasst sind, wobei die Segmente mindestens ein Übertragungssegment und mindestens ein Segment für die Laufzeitvorhaltsanpassung umfassen, und wobei die indizierte Tabelle eine Vielzahl von Bereichen von Elevationswinkeln eines Endgeräts mit einem bedienenden Satelliten mit entsprechenden Einstellungen umfasst;
Mittel zum Erhalten einer Angabe bezüglich eines Index, der die Einstellung definiert, die auf den Elevationswinkel des Endgeräts anwendbar ist;
Mittel zum Planen einer Übertragung, wobei die Übertragung eine Aufwärtsstreckenübertragung ist; und
Mittel zum Empfangen der Übertragung vom Endgerät gemäß der Einstellung, die auf den Elevationswinkel des Endgeräts anwendbar ist.

11. Vorrichtung nach Anspruch 10, wobei die Einstellung auch für einen Azimutwinkel des Endgeräts mit dem bedienenden Satelliten definiert ist.

12. Vorrichtung nach Anspruch 10 oder 11, ferner umfassend Mittel zum Senden der indizierten Tabelle an das Endgerät.

13. Vorrichtung nach Anspruch 12, ferner umfassend Mittel zum Schätzen des Elevationswinkels und des Azimutwinkels des Endgeräts auf der Grundlage der Position des Endgeräts und von Satellitenephemeridendaten.

14. Vorrichtung nach Anspruch 13, ferner umfassend Mittel zum Bestimmen, auf der Grundlage der indizierten Tabelle, von Einstellungen, die dem geschätzten Elevationswinkel und dem geschätzten Azimutwinkel entsprechen, und Mittel zum Senden von Informationen bezüglich der Einstellungen, die dem geschätzten Elevationswinkel entsprechen, an das Endgerät.

15. Vorrichtung nach Anspruch 10, ferner umfassend Mittel zum Erhalten, vom Endgerät, einer Schätzung des Elevationswinkels und einer Schätzung eines Azimutwinkels, oder Mittel zum Erhalten der Angabe bezüglich des Index, der die Einstellung definiert, die auf den Elevationswinkel des Endgeräts anwendbar ist.

**Revendications**

1. Appareil, compris dans un dispositif terminal (100, 102), l'appareil comprenant :

des moyens pour obtenir des réglages qui définissent, pour un angle d'élévation estimé du dispositif terminal avec un satellite de desserte, des durées de segments compris dans une période de transmission, dans lequel les segments comprennent au moins un segment de transmission et au moins un segment pour l'ajustement de l'avance temporelle ; et

des moyens pour émettre une transmission en liaison montante vers un nœud d'accès compris dans un réseau non terrestre, pendant le au moins un segment de transmission selon le réglage applicable à l'angle d'élévation estimé du dispositif terminal ; et

des moyens pour effectuer un ajustement de l'avance temporelle après un segment de transmission pendant le au moins un segment pour l'ajustement de l'avance temporelle selon le réglage applicable à l'angle d'élévation estimé du dispositif terminal.

2. Appareil selon la revendication 1, dans lequel les réglages obtenus sont définis également pour un angle d'azimut d'un dispositif terminal avec le satellite de desserte.

3. Appareil selon la revendication 1 ou la revendication 2, comprenant en outre des moyens pour estimer l'angle d'élévation du dispositif terminal avec le satellite de desserte.

4. Appareil selon la revendication 3, comprenant en outre des moyens pour estimer l'angle d'élévation sur la base d'une localisation du dispositif terminal obtenue à partir d'un système mondial de navigation par satellite et d'éphémérides de satellite.

5. Appareil selon la revendication 3 ou 4, comprenant en outre des moyens pour émettre une indication indiquant l'angle d'élévation estimé au nœud d'accès.

6. Appareil selon la revendication 5, dans lequel l'indication comprend un indice d'une table indexée émise par le nœud d'accès.

7. Appareil selon l'une quelconque des revendications précédentes, comprenant en outre des moyens pour obtenir, du nœud d'accès, une table indexée comprenant les réglages qui définissent, pour l'angle d'élévation estimé du dispositif terminal, les durées des segments compris dans la période de transmission.

8. Appareil selon la revendication 7, dans lequel les réglages définissent en outre des valeurs d'avance temporelle à appliquer dans chaque segment.

9. Appareil selon la revendication 7 ou 8, comprenant en outre des moyens pour obtenir, du nœud d'accès, une indication d'un indice de la table indexée, qui correspond aux réglages qui définissent, pour l'angle d'élévation estimé du dispositif terminal, les durées des segments compris dans la période de transmission.

10. Appareil, compris dans un nœud d'accès (104) compris dans un réseau non terrestre, l'appareil comprenant :

des moyens pour définir une table indexée qui définit un réglage qui définit des durées de segments compris dans une période de transmission, dans lequel les segments comprennent au moins un segment de transmission et au moins un segment pour l'ajustement de l'avance temporelle, et dans lequel la table indexée comprend une pluralité de plages d'angles d'élévation d'un dispositif terminal avec un satellite de desserte, avec des réglages correspondants ;

des moyens pour obtenir une indication concernant un indice qui définit le réglage qui est applicable à l'angle d'élévation du dispositif terminal ;

des moyens pour planifier une transmission, dans lequel la transmission est une transmission en liaison montante ; et

des moyens pour recevoir la transmission du dispositif terminal selon le réglage qui est applicable à l'angle d'élévation du dispositif terminal.

11. Appareil selon la revendication 10, dans lequel le réglage est défini également pour un angle d'azimut du dispositif terminal avec le satellite de desserte.

12. Appareil selon la revendication 10 ou 11, comprenant en outre des moyens pour émettre la table indexée au dispositif terminal.

**13.** Appareil selon la revendication 12, comprenant en outre des moyens pour estimer l'angle d'élévation et l'angle d'azimut du dispositif terminal sur la base de la localisation du dispositif terminal et de données d'éphémérides de satellite.

**14.** Appareil selon la revendication 13, comprenant en outre des moyens pour déterminer, sur la base de la table indexée, des réglages correspondant à l'angle d'élévation estimé et à l'angle d'azimut estimé et des moyens pour émettre des informations concernant les réglages correspondant à l'angle d'élévation estimé au dispositif terminal.

**15.** Appareil selon la revendication 10, comprenant en outre des moyens pour obtenir, du dispositif terminal, une estimation de l'angle d'élévation et une estimation d'un angle d'azimut, ou des moyens pour obtenir l'indication concernant l'indice qui définit le réglage qui est applicable à l'angle d'élévation du dispositif terminal.

FIG. 1

X=256 ms

UL

Y=40 ms

210

220

**FIG. 2**

X = 256 [ms]

TA change (μs)

Elevation angle (degrees)

**FIG. 3A**

X = 256 [ms]

Doppler shift change (kHz)

Elevation angle (degrees)

**FIG. 3B**

EP 4 335 183 B1

| S1 | Determining timing drift as a function of elevation angle and satellite altitude. |

| S2 | Defining transmission segment lengths for different elevation angles. |

| S3 | Determining an elevation angle for a terminal device. |

| S4 | Initiating a transmission by the terminal device and applying the transmission segments. |

| S5 | Performing TA adjustment after a transmission segment. |

FIG. 4

FIG. 5

Elevation angle = 30 [degree]

FIG. 6B

Tx period [ms]

$|\Delta TA|$ [$\mu$s]

Elevation angle = 10 [degree]

FIG. 6A

Tx period [ms]

$|\Delta TA|$ [$\mu$s]

FIG. 6C

**Elevation angle = 90 [degree]**

FIG. 6E

**Elevation angle = 70 [degree]**

FIG. 6D

FIG. 6G

FIG. 6F

FIG. 7A

FIG. 7B

FIG. 8

FIG. 9

1000

FIG. 10

1100

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006234624 A1

- US 2020404683 A1

**Non-patent literature cited in the description**

- **THALES et al.** On Doppler Shift Compensation and Timing Advance in NTN. *3GPP Drafts; R1-1907390 - On Doppler Shift Compensation and Timing Advance in NTN, 3rd Generation Partnership Project (3GPP), Mobile Competence Centre; 650, Route Des Lucioles; F-06920 Sophia-Antipol*, 13 May 2019, vol. RAN WG1, 20190513-20190517